# EUROPEAN PATENT APPLICATION

(11) **EP 4 353 446 A1**
(43) Date of publication of application: **17.04.2024**
(21) Application number: 22201353.4
(22) Date of filing: 13.10.2022
(51) Int. Cl.: B29C 64/106, B29C 64/118, B29C 64/209, B29C 64/393, B33Y 10/00, B33Y 30/00

(54) **ARRANGEMENT FOR ADDITIVE MANUFACTURING OF A STRUCTURE**

(71) Applicant: ETH Zurich, 8092 Zurich (CH)
(72) Inventor: DILLENBURGER, Benjamin, 8032 Zürich (CH); LESCHOK, Matthias, 8004 Zürich (CH)

(57) **Abstract**

An arrangement (10) for additive manufacturing of a structure, preferably an architectural structure, the arrangement comprising a nozzle (20) having a construction material outlet (27) configured to extrude construction material in the form of a hollow core bead (30) along a manufacturing path (M; M') defined by multiple points (A), a fluid outlet (31) configured to inject a fluid into the hollow core of the extruded bead, a fluid pressure adjusting device (21) configured to adjust a pressure of the fluid injected into the hollow core of the extruded bead via the fluid outlet, and a control unit (22) configured to determine a pressure value (P) assigned to a point of the manufacturing path and to control the fluid pressure adjusting device on the basis of the determined pressure value. Furthermore, a method for generating control data for such an arrangement is disclosed.

## Description

### Technical field

The present invention relates to an arrangement, an assembly and a system for additive manufacturing of a structure, preferably an architectural structure. Furthermore, the present invention relates to a method for generating control data for such an arrangement, assembly or system.

### Prior art

In typical additive manufacturing processes, three-dimensional physical objects are fabricated from three-dimensional digital models. These three-dimensional digital models are usually divided by a so-called slicing software into a stack of flat layers, each of said layers describing a linear manufacturing path for an additive manufacturing system. The additive manufacturing system builds up construction material along the manufacturing path of a first layer before advancing to an adjacent layer to build up construction material along the manufacturing path of said adjacent layer. The construction materials of the manufacturing paths of the successive layers are aggregated in order to create a full three-dimensional physical version of the digital model.

Recently, additive manufacturing technologies have been gaining ground in the architecture, engineering and construction sector. This sector requires large-scale components at an architectural scale. Among others, polymer extrusion systems have been scaled up to additive manufacture architectural structures. These include fused filament fabrication systems as well as fused granulate fabrication systems, which differ in the form of their feedstock. Whereas fused filament fabrication materials are provided in the form of a continuous filament of a thermoplastic material, e.g., fed from a large spool, fused granulate fabrication materials are provided in the form of thermoplastic granules. In both cases, the thermoplastic feedstock is fed into an extrusion mechanism comprising a screw for conveying the material, a heating device for melting the feedstock and a nozzle with an orifice through which the melted feedstock is extruded to generate a bead along the manufacturing path of each slice. These beads are stacked onto each other by the additive manufacturing system to produce the three-dimensional object.

For the manufacturing of architectural structures, large dimensional beads are necessary, requiring high-power heating to melt the feedstock and high-power cooling to solidify the extruded bead for obtaining high build-up rates. These requirements have rendered such processes economically not viable and environmentally unsuitable. To address these shortcomings, US 2016/0096320 A1 teaches the extrusion of beads having a hollow core, which significantly reduces both the required heating and cooling energies for fabricating an architectural structure in an additive fashion. Such hollow core beads also harden significantly faster due to their larger surface area. However, the technologies for additive manufacturing of architectural structures with hollow-core beads known from the prior art exhibit the disadvantage that they cannot ensure a constant high manufacturing quality.

### Summary of the invention

The present invention addresses these shortcomings of the prior art by providing an arrangement for additive manufacturing of a structure, preferably an architectural structure, comprising a nozzle, a fluid outlet, a fluid pressure adjusting device and a control unit. The different components of the arrangement can all be in direct or indirect contact with each other but some or all of these components can also be provided in a spread-out, non-contact fashion. The structure can be a component for the architecture, engineering and construction sector. The architectural structure can be a formwork for concrete, an architectural interior piece, a facade element, a piece of furniture, e.g., a chair, and/or another architectural component. Besides, the structure can be a component for the aircraft, naval, automotive or other industry. The structure can be a prototype and/or a component used for manufacturing a prototype for an arbitrary application. It can also be a component for the advertisement industry, e.g., an illuminated advertisement component. The component can be a large-scale fixture and/or a mould used for tooling, carbon fibre composites, concrete casting and/or other fabrication processes. The structure can have dimensions larger than 1 m, preferably larger than 2 m, and optionally larger than 5 m.

The nozzle of the arrangement of the invention comprises a construction material outlet configured to extrude construction material in the form of a hollow core bead along a manufacturing path. The manufacturing path is defined by multiple points and can correspond to the manufacturing paths as described above in connection with the prior art. The manufacturing path can be the path of a slice of the three-dimensional digital model of the structure. The slice can be a planar or a non-planar slice. Alternatively or additionally, the manufacturing path can be defined, e.g., freely designed, with a set of points and/or curves in the three-dimensional space, optionally without being based on a three-dimensional digital model of the structure to be manufactured. These points and/or curves can but do not have to be in the same plane. The nozzle can be an integrally formed single component or a component formed by two or more parts, which are assembled. Preferably, the nozzle is formed integrally by additive manufacturing, e.g., from metal, preferably from aluminium or copper. The construction material can be a polymer, preferably a thermoplastic, but may also be a different material. The construction material outlet can comprise a single orifice, preferably in the form of a circular or rectangular ring, but may also comprise multiple orifices, which may be separated from each other by structural portions of the nozzle. If the construction material outlet is formed as a circular ring, the nozzle may comprise a rod-like element, e.g., a thorn, provided coaxially and in the centre of the circular ring orifice. The rod-like element may be configured to split molten construction material into a thin wall and an empty core.

The nozzle may comprise an attachment interface for attaching the nozzle to an extruder. The attachment interface may be formed as a thread, e.g., an external thread, to be provided in threaded engagement with a thread, e.g., an internal thread, of the extruder. Alternatively or additionally, the nozzle may be attached to the extruder via a rotational-free connection system without a thread. The nozzle may also be formed integrally with the extruder. In addition, the nozzle may comprise a construction material inlet via which melted construction material may be fed into the nozzle from the extruder. The nozzle may exhibit an elongate form, preferably a cylindrical form. The inlet and outlet for the construction material may be provided on opposite faces of the elongate nozzle.

The fluid outlet configured to inject a fluid into the hollow core of the bead extruded through the construction material outlet of the nozzle may comprise a single orifice or multiple orifices. If the fluid outlet comprises multiple orifices, these can be adjacent to one another or some or all of said orifices can be provided separate and remote from each other. The fluid outlet can be integrated into the nozzle but can also be provided separate from the nozzle. In the latter case, the fluid outlet can be attached to the nozzle but can also be provided remote from the nozzle without any physical contact between the two components. However, the fluid outlet is arranged with respect to the nozzle and configured such that it can inject a fluid into the hollow core of the beam extruded from the construction material outlet. The fluid can be a liquid and/or a gas and is preferably air. The fluid can also be a foam or any other functional material.

The fluid pressure adjusting device is configured to adjust a pressure of the fluid injected into the hollow core of the extruded bead via the fluid outlet. An adjustment of the pressure may be an adaptation of a non-atmospheric pressure to a different non-atmospheric pressure. In other words, if the non-atmospheric pressure is adjusted, it can be either increased or decreased to a different non-atmospheric pressure value. In an alternative embodiment, the pressure control can also be switched-on or switched-off. The fluid pressure adjusting device can be integrated into the pressure source and/or can be provided separately from the pressure source. The fluid pressure adjusting device can either control the pressure of the fluid directly or indirectly via controlling another parameter of the fluid, e.g., the temperature, which exhibits a predefined correlation with the fluid pressure. The fluid pressure adjusting device can be situated upstream and/or downstream of the fluid outlet of the arrangement.

Furthermore, the arrangement comprises a control unit configured to determine a pressure value assigned to a point of the manufacturing path and to control the fluid pressure adjusting device on the basis of the determined pressure value. In an embodiment, the control unit comprises a memory, e.g., a non-volatile memory, storing data describing the manufacturing path of a slice of the three-dimensional digital model by a plurality of points. The points can be stored in an arbitrary coordinate system, e.g., a cartesian or polar coordinate system. Some or all of these points describing the manufacturing path may have a pressure value assigned to that specific point. The pressure values assigned to the different points of the manufacturing path may be different from each other and larger than atmospheric pressure. They can also be equal or smaller than atmospheric pressure. The pressure values may be absolute values or differential values describing a pressure difference to another pressure value. The data can be stored as a lock-up table on the memory.

The control unit may be configured to determine the next position of the manufacturing path stored in the data and the pressure value assigned to that position in said data. Once the respective pressure value has been determined by the control unit, it may be configured to control the pressure adjusting device on the basis of said determined value. In an embodiment, the control unit may be configured to control the fluid pressure adjusting device such that the pressure of the fluid injected into the hollow core of the extruded bead corresponds to the determined pressure value. The different pressure values assigned to the different positions of the manufacturing path may be predetermined and loaded into a memory of the control unit prior to starting the actual additive manufacturing process of the structure. Additionally or alternatively, the data assigning the different pressure values to the different points of the manufacturing path can be fed to the control unit during the manufacturing process.

The underlying idea of the present invention is that the manufacturing quality of the extruded hollow core bead depends on the pressure of the fluid injected into said bead. In particular, depending on the geometry of the manufacturing path, the pressure of the fluid injected into the hollow core bead via the fluid outlet should be adjusted to obtain a structure with optimal quality. By having a control unit configured to determine a pressure value assigned to a point of the manufacturing path and to control the fluid pressure adjusting device on the basis of the determined pressure value, the arrangement for additive manufacturing of a structure of the present invention can take the geometry of the manufacturing path into account and adjust the pressure values at the different points to the geometry of the manufacturing path. The arrangement of the present invention therefore allows for the additive manufacturing of an architectural structure with hollow core beads having the advantages as outlined above in connection with the prior art, at the same time allowing for superior fabrication quality also in case of complex geometries. Besides, with the present invention, the bead diameter may be easily varied along the manufacturing path by adjusting the pressure values. Hollow core beads manufactured with devices of the present invention exhibit increased strength and very good thermal properties, which make them highly attractive for architectural applications.

According to an embodiment, the arrangement further comprises a sensing device for determining at least one of a geometrical parameter of the extruded bead and a parameter of the fluid in the hollow core of the extruded bead. The sensing device can comprise one or multiple sensors. The sensing device can be integrated or attached to the nozzle and/or may be provided separate from the nozzle. According to this embodiment, the control unit is configured to control the fluid pressure adjusting device on the basis of the determined parameter. This embodiment allows for an analysis of the quality of the extruded bead during fabrication, e.g., by comparing the value determined by the sensing device with a desired value. If there is a deviation exceeding a threshold, the control unit can control the fluid pressure adjusting device to adjust the pressure of the fluid injected into the hollow core of the extruded bead to counteract such a deviation. Alternatively or additionally, the control unit can be configured to adjust the operation of an extruder, e.g., a material extrusion amount of the extruder, and/or a speed of a moving mechanism for moving the nozzle along the manufacturing path, if there is a deviation exceeding a threshold. The threshold can be predetermined and stored in a memory of the control unit. This embodiment therefore allows for a manufacturing of a structure with hollow core beads with superior quality. The sensing device can be configured to continuously monitor the parameter of the bead. In an alternative embodiment, the sensing device can be configured to monitor the parameter at predetermined positions and/or times.

The geometrical parameter of the extruded bead can be at least one of a wall thickness and an extrusion height of the extruded bead. A wall thickness of the extruded bead can correspond to a thickness of the wall ranging from the outer circumference of the bead to an inner void of the bead. If the hollow core bead has a shape of a hollow cylinder, the wall thickness corresponds to the radial extension of the ring surrounding the cylindrical inner void. The wall thickness can be determined at a single or at multiple locations of the extruded bead. The extrusion height may correspond to the height of the entire extruded bead, e.g., in gravitational direction. If the extruded bead would collapse under its own weight, for example, this would result in a decrease of the extrusion height that could be detected by the sensing device. The control unit could then increase the pressure of the fluid injected into the hollow core of the extruded bead via the fluid pressure adjusting device in response to said detection. Likewise, if the detected wall thickness of the extruded bead is smaller than a desired value, the control unit could be configured to decrease a pressure of the fluid injected into the hollow core of the extruded bead via the fluid pressure adjusting device so as to counteract an overinflation of the extruded bead, such an overinflation usually going along with a decrease in wall thickness. In an alternative embodiment, the sensing device is configured to determine a geometrical parameter different from the wall thickness and the extrusion height. Additionally or alternatively, the sensing device can be configured to determine a parameter of the fluid in the hollow core of the extruded bead, e.g., the fluid pressure and/or temperature. The control unit can be configured to compare the determined geometrical and/or fluid parameters with predefined values, which may be stored in a memory of the control unit, and adjust the pressure of the fluid pressure adjusting device if the determined value exceeds such a predefined value. Alternatively or additionally, the control unit can be configured to adjust the material extruded by an extruder and/or a speed of a moving mechanism for moving the nozzle along the manufacturing path as described above.

According to an embodiment, the fluid pressure adjusting device comprises an adjustable flow control valve for adjusting the pressure of the fluid injected into the hollow core of the extruded bead. The adjustable flow control valve can be an electronic pressure valve. The flow control valve can be provided in the fluid line between a fluid source and the fluid outlet. Additionally or alternatively, the fluid pressure adjusting device can comprise a fluid source, e.g., including a pump, for adjusting the pressure of the fluid injected into the hollow core of the extruded bead, and/or other devices for adjusting the fluid pressure of the fluid.

According to an embodiment, the arrangement further comprises a pressure relief valve to relief an overpressure present in the hollow core of the extruded bead. The pressure relief valve can be in direct fluid communication with the fluid outlet, e.g., be provided in the fluid path between the fluid source and the fluid outlet. The pressure relief valve can be in fluid communication with the fluid outlet via only the hollow core of the extruded bead. The pressure relief valve may be spring-actuated. It has been found out that in particular in large-scale applications for manufacturing architectural structures, print imperfections and/or particular geometries, e.g., corners of the manufacturing path, can result in a pressure increase in the hollow core of the extruded bead, which leads to an overinflation and therefore a diameter larger than aspired. The provision of a pressure relief valve according to the present embodiment allows for release of such an overpressure, thereby improving the fabrication quality of the manufactured structure.

According to an embodiment, the pressure relief valve is adjustable and part of the fluid pressure adjusting device. In this embodiment, the control unit is configured to adjust the adjustable pressure relief valve on the basis of the pressure value determined by the control unit. In other words, in this embodiment, the overpressure at which the pressure relief valve is actuated is adjustable by the control unit of the present invention. This embodiment has the advantage that the overpressure at which the pressure relief valve is actuated can be adjusted to the geometry of the manufacturing path. At the same time, in an embodiment, the control unit can be configured to adjust the overpressure at which the pressure relief valve is actuated on the basis of the parameter determined by the sensing device described above. Therefore, this embodiment provides an arrangement with a fluid pressure adjusting device with low complexity and high reliability.

According to an embodiment, the construction material outlet of the nozzle is configured to extrude a hollow core bead with a cross-sectional shape of at least one of a hollow polygon, preferably a hollow rectangle, e.g., a hollow square, a hollow oval, preferably a hollow circle, and a solid polygon or solid oval comprising one or multiple polygonal or oval voids. The hollow polygon and the hollow oval can comprise one or more internal crossing reinforcement struts but can also be completely hollow without any internal strut or other form of reinforcement. To be able to extrude a bead having such a cross-sectional shape, the nozzle comprises a structure with a respective orifice or respective orifices forming a corresponding die. The respective structures can be integrally formed with the rest of the nozzle. Alternatively, the respective structures can be embodied by a separate part which is attachable to the nozzle and detachable to be replaced by another part having a different structural composition to extrude a bead having a different cross-sectional shape. Besides the shapes mentioned explicitly above, the nozzle can be configured to extrude different or a combination of those shapes as long as the extruded bead has a hollow core.

According to an embodiment, the nozzle comprises the fluid outlet and the fluid outlet is formed coaxially with the construction material outlet. The fluid outlet may be positioned at the centre of the construction material outlet. This embodiment provides an arrangement with low complexity.

According to an embodiment, the arrangement comprises a cooling device for cooling the extruded hollow core bead to accelerate solidification. The cooling device can be provided downstream of the construction material outlet. Additionally or alternatively, the cooling device can be integrated into the construction material outlet. The cooling device can be based on the physical principle of conductive cooling, convective cooling or a combination both. In an embodiment, cooling channels for a cooling liquid, e.g., water, are provided in the nozzle at the construction material outlet. Additionally or alternatively, the cooling device can comprise cooling outlets positioned downstream of the construction material outlet for guiding a cooling fluid, e.g., cooled air and/or water fog, onto an extruded bead of construction material. The cooling outlet can comprise one or multiple cooling pipes positioned around the circumference of the construction material outlet. In an embodiment, the cooling device comprises a single cooling outlet, which is configured as a ring and is situated concentrically around the construction material outlet. Provision of the cooling device in this embodiment allows for a faster solidification of extruded construction material. This in turn increases the build-up rate since the construction material of a manufacturing path of a slice hardens faster, which implies that the manufacturing path of an adjacent slice can be stacked onto a previously laid out bead more promptly.

According to an embodiment, the arrangement comprises a heating device for heating a solidified bead in contact with which the hollow core bead is extruded from the construction material outlet. In an embodiment, the heating device comprises one or multiple heating outlets, which can be provided at the bottom of the construction material outlet so to be positioned adjacent to a previously laid out bead. The heating device can be configured to heat a fluid, e.g., a gas, to a temperature such it is able to melt a previously laid out and at least partially solidified bead. The heating device can also comprise a laser for heating said previously laid out bead. The melted bead allows for better adhesion between said previously laid out bead and the bead that is extruded from the construction material outlet, e.g., stacked onto the melted bead. This embodiment allows for the manufacturing of structures with large stability since the heating device results in a strong connection between beads stacked upon each other. It also allows for manufacturing of extra-large parts where the layer-cycle-time is long.

In an embodiment, the arrangement furthermore includes a closing mechanism, which may be incorporated into the nozzle, for cutting off an extruded hollow core bead. The closing mechanism can be a mechanical closing mechanism, e.g., a plate-like stripper. It can also be implemented by creating a vacuum in the hollow core bead via the fluid pressure adjusting device and the fluid outlet. Furthermore, the arrangement may comprise a puncturing component, which can be attached to the nozzle, for puncturing the extruded hollow core bead, e.g., from the outside, which can be controlled by the control unit described above. In case an overinflation of the bead cannot be controlled by any of the methods described above, which could be detected the sensing device described above, for example, the control unit may control the puncturing component to puncture the extruded hollow core bead so as to avoid a further overinflation of the bead.

The present invention further relates to an assembly for additive manufacturing of a structure, preferably an architectural structure. The assembly comprises an extruder with an extruder outlet, a melting device for melting a feedstock, a conveyance device for conveying the melted feedstock to the extruder outlet, a fluid source for providing a fluid and an arrangement according to one of the embodiments described above. The structure and/or the feedstock can be configured according to the embodiments described above. The extruder outlet can have a single orifice, e.g., a circular or rectangular orifice. Furthermore, the extruder may comprise an extruder inlet, which may exhibit a funnel for inserting the feedstock, preferably a granular feedstock. The extruder may exhibit an elongate shape, e.g., having a circular or rectangular cross-section, with the extruder outlet and the extruder inlet being provided on opposite sides of the extruder. The extruder may comprise a housing, in which the extruder inlet and the extruder outlet may be formed. The conveyance device can be configured as a spindle for conveying feedstock introduced into the device at the inlet to the extruder outlet. The spindle can be positioned within the extruder housing, the extruder housing and the spindle preferably being oriented coaxially to one another. The extruder may furthermore comprise a spindle drive, e.g., an electric motor, for driving a rotary movement of the spindle. The spindle drive and the spindle may be indirectly connected via a gear box.

Furthermore, the assembly comprises a melting device for melting feedstock of the extruder, e.g., feedstock introduced into the extruder inlet. The melting device can be provided inside or outside of the extruder housing but may also be integrated into said housing. In an embodiment, the melting device is formed ring-like and/or is situated coaxially to the housing, the conveyance device, the extruder outlet or a combination thereof. The melting device can be electrically actuated and/or actuated by a fluid, e.g., water. The melting device can extend along the conveyance device, e.g., along more than 20%, preferably more than 30%, of the axial length of the conveyance device. The melting device can comprise one or more heating bands which may electrically actuated. The nozzle of the arrangement according to one of the previously described embodiments is coupled to the extruder outlet to receive the melted feedstock. For example, the nozzle inlet is coupled to the extruder outlet such that feedstock melted by the extruder can be conveyed through the extruder outlet into the nozzle inlet and from the nozzle inlet to the construction material outlet to extrude a hollow core bead. Furthermore, the conveyance device of the extruder can be configured to convey the melted feedstock not only through the extruder but also through the nozzle. The fluid outlet of the arrangement is coupled to the fluid source for receiving the fluid, e.g., by a pipe. Concerning the understanding of the individual features and their advantages, it is referred to the above-described embodiments concerning the arrangement of the present invention.

The present invention furthermore relates to a system for additive manufacturing of a structure, preferably an architectural structure comprising an assembly according to the previously described embodiments and a moving mechanism for moving the construction material outlet of the nozzle along a predetermined manufacturing path. The moving mechanism can be a robot, e.g., a 5-, 6- or 7-axes robot. The robot can be a conventional industrial robot operating within a protection housing, e.g., a protection fence. Alternatively, the robot can be a collaborative robot configured to work side by side with humans without any protection devices therebetween. In another embodiment, the moving mechanism comprises a positioning device with an x-axis position mechanism, a y-axis position mechanism and a z-axis position mechanism configured to position the construction material outlet along the three cartesian coordinates. The moving mechanism can also be configured in a different fashion.

The system may comprise a control unit with a memory, e.g., a non-volatile memory, for storing the manufacturing paths of the different slices for manufacturing the structure. The control unit can be configured to control the moving mechanism such that the construction material outlet of the nozzle is moved along the manufacturing path of a respective slice. Additionally or alternatively, the control unit can be configured to control the extruder, e.g., the conveyance device and/or the heating device, to coordinate the heating and conveying of the feedstock to the construction material outlet of the nozzle with the nozzle position, its movement velocity and the manufacturing path, respectively. If the construction material outlet of the nozzle is moved with a higher velocity by the moving mechanism, the control unit will have to turn up the heating device and speed up the conveyance device to provide a higher throughput of melted feedstock, for example. If the moving mechanism is configured as a robot, the extruder comprising the nozzle can be attached to the end effector of the robot.

Furthermore, the present invention relates to a method for generating control data for an arrangement, an assembly or a system according to one of the previously described embodiments for additive manufacturing of a structure, preferably an architectural structure. The control data can be data that can be loaded in a memory of the control unit for controlling the fluid pressure adjusting device. Alternatively or additionally, the control data could be live streamed to the control unit. The control data can function as data on the basis of which the control unit controls the fluid pressure adjusting device. The method comprises the step of obtaining a manufacturing path defined by multiple points, e.g., from a slice of a three-dimensional model of the structure generated by a slicer software as described above. Alternatively, the manufacturing path can be a manufacturing path that is not based on a three-dimensional model but that was designed with a set of points and/or curves in the three-dimensional space as described above. According to the method of the present invention, the geometry of said manufacturing path is analysed. Analysing the geometry may comprise determining curvatures, gradients, degrees of turning and/or other geometrical parameters at the multiple points of the manufacturing path. On the basis of the analysed geometry, the method of the present invention assigns pressure values to the multiple points of the manufacturing path. At the same time, the method may assign an orientation and/or a rotational position of the nozzle around its central axis to each of the multiple points of the manufacturing path, the orientation and/or rotational position of the nozzle around its central axis being determined so as to optimize the manufacturing quality of the hollow core bead. Concerning the understanding of the individual features of the method of the present invention as well as their advantages, it is referred to the above disclosure in connection with the arrangement for additive manufacturing of a structure.

According to an embodiment, the analysing of the geometry of the manufacturing path includes determining degrees of turning of the manufacturing path at the multiple points, and the step of assigning pressure values to the multiple points includes assigning a lower pressure value to a point of the manufacturing path at which a higher degree of turning has been determined than to a point of the manufacturing path at which a lower degree of turning has been determined. In other words, if the manufacturing path exhibits a high degree of turning, e.g., at corners, the method according to the present invention assigns a lower pressure value to said point than at portions of the manufacturing path where the degree of turning is rather small, e.g., where the manufacturing path corresponds to a straight line. This embodiment has the advantage that at positions with high degrees of turning of the manufacturing path resulting in a reduction in internal diameter of the extruded bead, the pressure of the fluid introduced into the hollow core of the extruded bead is reduced, thereby avoiding an overinflation of the bead.

Additionally or alternatively, the step of analysing the geometry of the manufacturing path can include determining whether there is a self-intersection of the manufacturing path at one or more of the multiple points. If this is the case, the method may generate an adjusted toolpath with no or a reduced self-intersection at the one or more of the multiple points. Alternatively or additionally, preferably when the self-intersection cannot by avoided by adjusting the toolpath, the step of assigning pressure values to the multiple points may include assigning a lower pressure value to a point at which there is a self-intersection of the manufacturing path compared to the pressure value assigned to said point if no self-intersection would have been present. This adaptation of the pressure to the presence of self-intersections ensures that good fabrication quality is also ensured in such complicated situations. If the pressure is not adapted to such self-intersections, there will be a pressure build-up resulting in an overinflation and potentially destruction of the hollow core bead. At the same time, the manufacturing path can be adjusted at an intersection to push the bead down into the previous layer when printing the first line of the intersection, and then lift the nozzle slightly for the point of intersection. Additionally or alternatively, the step of analysing of the geometry of the manufacturing path includes determining whether there is a start of a manufacturing path at one of the multiple points, and the step of assigning pressure values to the multiple points includes assigning a lower pressure value to a point at which there is a start of the manufacturing path than to a point of the manufacturing path at which there is no start of the manufacturing path.

At the same time, in all of the above cases, i.e., where high degrees of turning and/or a self-intersection and/or a start of the manufacturing path, is determined, the method can generate control data for the extruder, on the basis of which the control unit of the arrangement described above can control the extruder. The control data for the extruder can comprise data, which will control the extruder in such a way that the extruded hollow core bead exhibits a larger wall thickness compared to a situation where a lower degree of turning and/or no self-intersection and/or no start has been determined, or even transitions to a completely solid bead at the respective position. The control data for the extruder and the assigned pressure value(s) can be aligned with one another to produce a bead with the desired configuration. This ensures that a good fabrication quality is maintained also in complex geometries, i.e., the manufactured structure exhibits a shape very close to the desired shape also in situations of complex geometry.

According to an embodiment, the analysing of the geometry of the manufacturing path includes determining a degree of turning of the manufacturing path at one of the multiple points. The method according to this embodiment further comprises the step of comparing the determined degree of turning of the manufacturing path at said point with a predefined limit value, and adjusting the manufacturing path to decrease the degree of turning at said point when the determined degree of turning exceeds the predefined limit value. The method could require that there are no corners, which are not rounded or chamfered, and/or that there is no curvature over a predetermined threshold. With this method step, it is ensured that also in situations, in which the geometry of the manufacturing path is such that a high-quality printing cannot be provided by the arrangement, assembly or system of the present invention, high quality fabrication is still possible due to a suitable adjustment of the manufacturing path.

In cases where the degree of turning at a point of the manufacturing path cannot be adjusted to below the predefined limit value, the pressure value assigned said point can be set to atmospheric pressure or even below atmospheric pressure, e.g. 0 bar. This would result in the extruded bead transitioning to a solid bead or at least a hollow core bead with a large wall thickness at the respective position. At the same time, the method can generate control data for the extruder as described above, which would control the extruder in such a way that the extruded hollow core bead exhibits a larger wall thickness or even transitions to a completely solid bead at the respective position. The control data for the extruder and the assigned pressure value can be aligned with one another to produce a bead with the desired configuration.

### Brief description of the figures

Fig. 1 shows a robot for additive manufacturing of an architectural structure according to an embodiment of the invention.
Fig. 2 shows an assembly and an arrangement for additive manufacturing of an architectural structure of the robot of Fig. 1 according to an embodiment of the invention.
Figs. 3 to 5 show perspective and sectional views of a nozzle of the arrangement of Fig. 2 according to an embodiment of the invention.
Figs. 6 to 8 show perspective and sectional views of a nozzle of the arrangement of Fig. 2 according to another embodiment of the invention.
Fig. 9 shows a flow chart of a method for generating control data for the robot of Fig. 1 according to an embodiment of the invention.
Fig. 10a and 10b show a manufacturing path defined by multiple points as well as pressure values assigned to said multiple points according to an embodiment of the invention.
Fig. 11 shows a flow chart of a method for manufacturing an architectural structure on the basis of control data generated with the method according to Fig. 9 according to an embodiment of the invention.
Fig. 12 shows a relative positioning of different beads with respect to each other according to an embodiment of the invention.
Fig. 13 shows different cross-sectional shapes of hollow core bead according to embodiments of the invention.

### Detailed description of embodiments

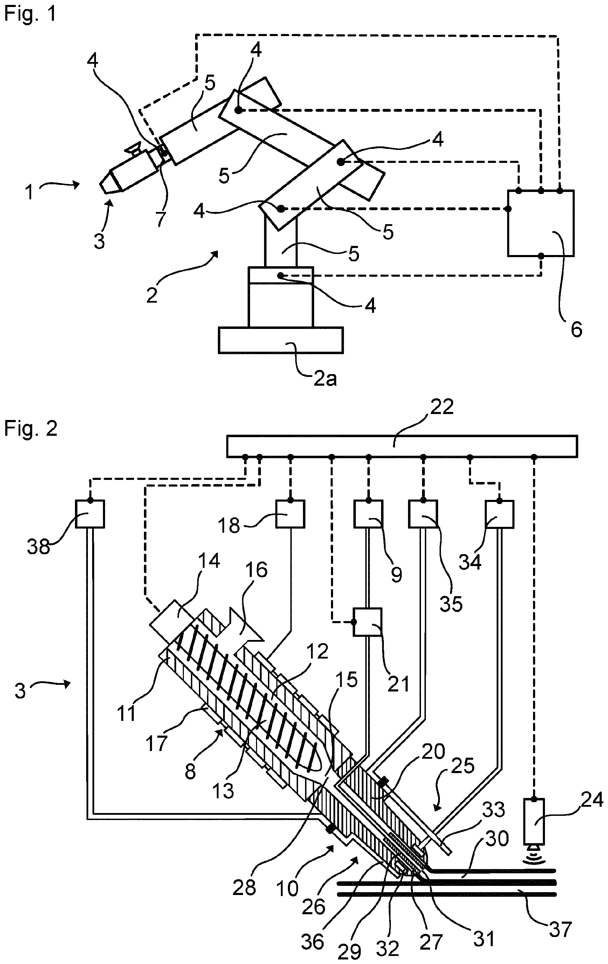

Fig. 1 shows a system 1 for manufacturing of an architectural structure comprising a moving mechanism 2 and an assembly for additive manufacturing of an architectural structure 3. In the present embodiment, the moving mechanism 2 is a robot, preferably a conventional 6-axes industrial robot. The robot 2 comprises five different joints 4, which are connected by links 5 forming a kinematic chain from a basis 2a to an end effector 7 at the distal end of the robot 2. Each of the joints 4 of the robot 2 comprises a drive for moving the two links 5 attached to the respective joint 4 with respect to each other. The drives of the joints 4 are controllable via a control unit 6 of the robot 2. If the control unit 6 is provided with a target position and orientation of the end effector 7 of the robot 2, it is configured to actuate the different drives of the joints 4 in such a way that the end effector 7 is moved to said desired target position and exhibits the desired target orientation. If the control unit 6 is provided with a manufacturing path along which the robot 2 is ought to move the end effector 7, the control unit 6 is configured to control the different drives of the joints 4 such that the end effector 7 follows said manufacturing path with a desired orientation.

The different drives of the joints 4 of the robot 2 are connected to the control unit 6 with wires and/or wirelessly. The control unit 6 comprises a memory, preferably a non-volatile memory, for storing manufacturing paths of different slices of a three-dimensional model of the architectural structure that is to be manufactured with the system 1. Each of the slices can be a planar or non-planar slice. In an alternative embodiment, the stored manufacturing path is not obtained from a slice of a three-dimensional model but is a path that was designed by points and/or curves in the three-dimensional space as described above. In addition, the control unit 6 comprises a processor configured to move the end effector 7 of the robot 2 along the manufacturing path of a first slice stored in the memory of the control unit 6, then advance the end effector 7 of the robot 2 to a position on a second slice stored in said memory of the control unit 6, move the end effector 7 along the manufacturing path of said second slide, advance the end effector 7 to a third slice etc.

Fig. 2 shows the assembly for additive manufacturing of an architectural structure 3 of the robot 2 of Fig. 1, the assembly 3 being attached, preferably releasably attached, to the end effector 7 of the robot 2. The assembly 3 comprises an extruder 8, a fluid source 9 and an arrangement for additive manufacturing of an architectural structure 10. The extruder 8 comprises an elongate and preferably cylindrical housing 11 with an internal working space 12 in which a conveyance device 13, preferably a spindle, is rotatably supported. At a face of the housing 11, a drive 14, preferably an electric motor, for rotatory driving the spindle 13 is provided. At the opposite face, the housing 11 exhibits an extruder outlet 15, which is formed as a cylindrical orifice in the present embodiment. In addition, the extruder 8 exhibits an extruder inlet 16 formed as a funnel in the lateral surface of the housing 11. The extruder can exhibit a different configuration, e.g., a configuration in which components are integrated into the extruder housing. The inlet 16 is positioned towards the face of the housing 11 facing away from the extruder outlet 15.

Within the housing 11 and extending substantially along most of the axial length of the working space 12 and the spindle 13, a melting device 17 is provided. The melting device 17 is formed by multiple heating bands integrated into the housing 11 of the extruder 8. In the present embodiment, the melting device 17 comprises several heating bands, which are in electrical connection with an electrical melting source 18. The melting source 18 can be configured to circulate a current through the heating bands of the melting device 17. The extruder 8 of the present embodiment is configured to operate with a granular feedstock introduced into the funnel of the extruder inlet 16. The granular feedstock inserted through the inlet 16 into the working space 12 is conveyed by the spindle 13, which is driven by the motor 14, towards the extruder outlet 15 while being melted by the melting device 17.

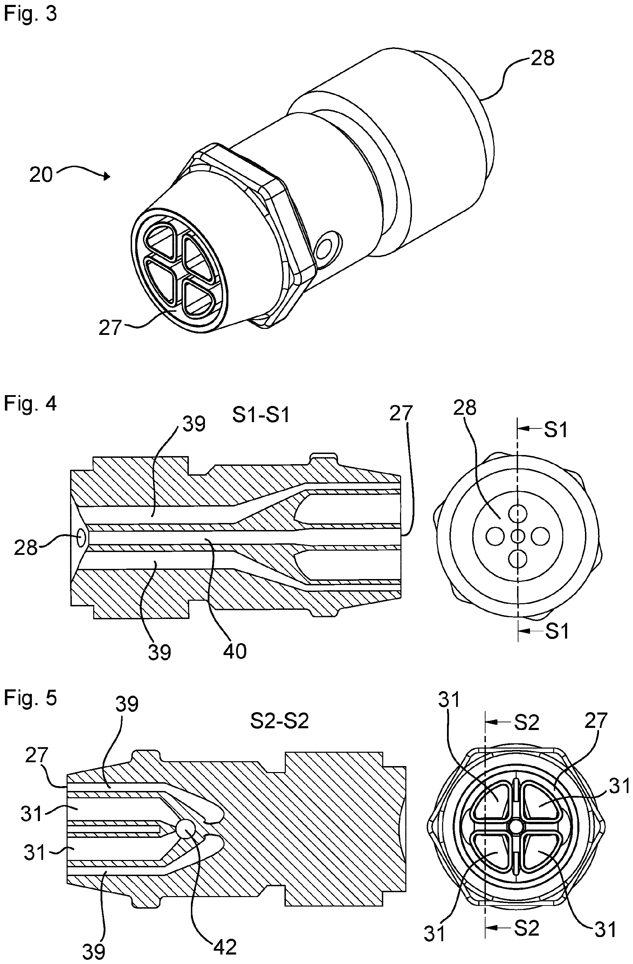

The arrangement for additive manufacturing of an architectural structure 10 comprises a nozzle 20, which is described in detail below with reference to Figs. 3 to 8. In addition, the arrangement 10 of the present embodiment comprises a fluid pressure adjusting device 21, a control unit 22, a sensing device 24, a cooling device 25 and a heating device 26. The nozzle 20 comprises a nozzle inlet 28, which is in fluid communication with the extruder outlet 15. The nozzle 20 is coupled, preferably releasably coupled, to the face of the housing 11 of the extruder 8 exhibiting the extruder outlet 15. The nozzle 20 exhibits an elongate profile having the nozzle inlet 28 at one face and a construction material outlet 27 at on opposite face. The nozzle 20 is configured to extrude construction material from the construction material outlet 27 in the form of a hollow core bead 30, the construction material being introduced into the nozzle inlet 28 from the extruder outlet 28.

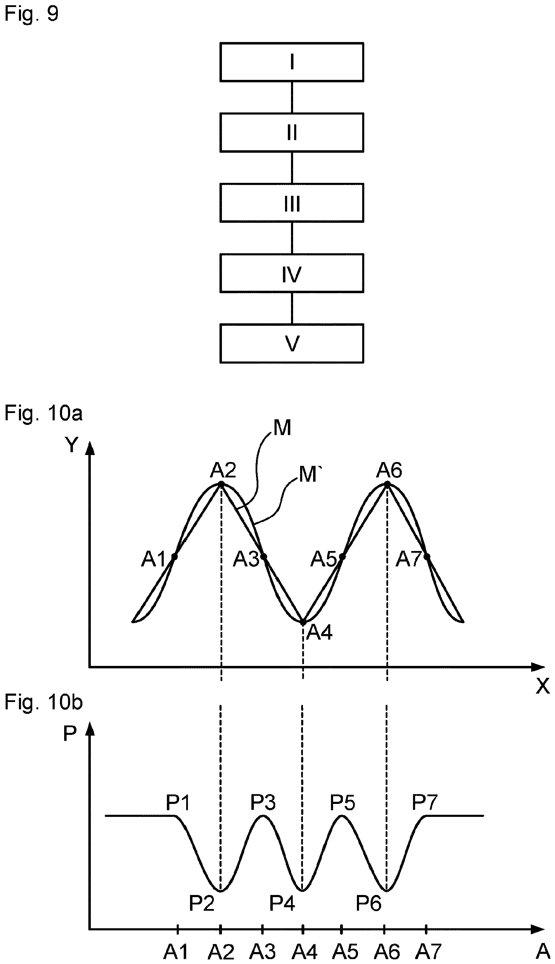

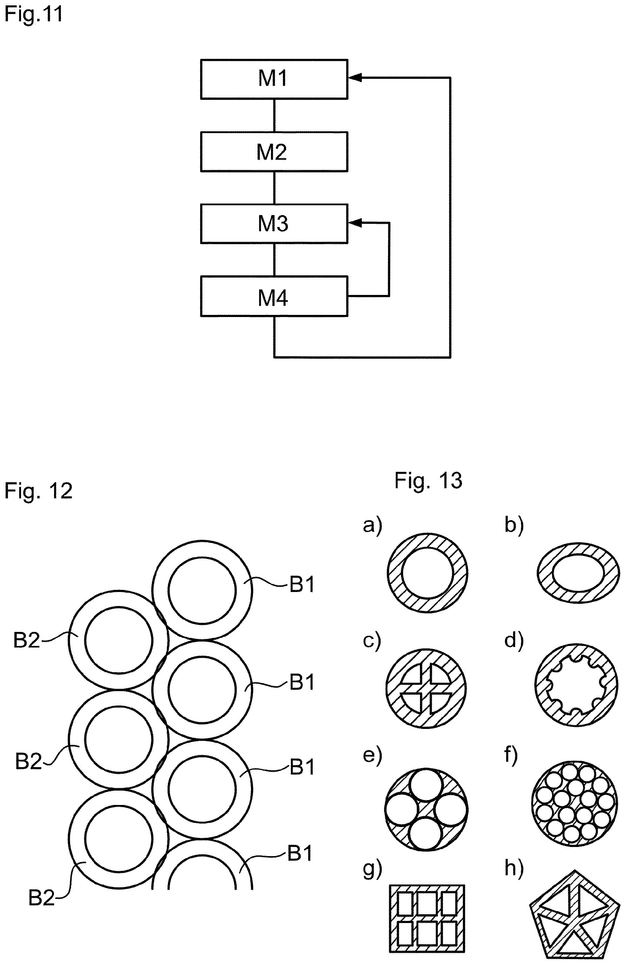

The hollow core bead 30 extruded from the nozzle 20 can have different cross-sectional shapes, some of which are illustrated in Fig. 13. As shown in Figs. 13A to 13D, the hollow core bead 30 can have a cross-sectional shape of a hollow oval, e.g., a hollow circle (see Fig. 10A) or a hollow ellipse (see Fig. 10B). The hollow circle can have internal reinforcement struts as shown in Fig. 10C. In an alternative embodiment, the cross-section of the hollow core bead 30 exhibits a circular outer wall but an inner wall that deviates from a pure circular shape, e.g., by exhibiting one or multiple protruding or recessed portions as shown in Fig. 10D. Alternatively, the extruded hollow core bead 30 can have a cross-sectional shape of a hollow polygon, e.g., a hollow rectangle or a hollow pentagon, preferably with additional internal reinforcement struts as shown in Figs. 10G and H. In an alternative embodiment, the extruded hollow core bead 30 exhibits a cross-sectional shape of a solid polygon or solid oval but comprises multiple polygonal or oval voids. Figs. 10E and F show embodiments in which the hollow core bead 30 exhibits a circular solid cross-sectional shape having four (see Fig. 10E) or sixteen (see Fig. 10F) internal voids. The extruded hollow core bead 30 can have cross-sectional shapes different from those shown in Figs. 10A to 10H. For forming a hollow core bead 30 with a respective cross-sectional shape, the nozzle 20 comprises a corresponding structural pattern, i.e., a corresponding die pattern. For forming a hollow core bead 30 having a cross-sectional shape of a hollow circle as shown in Fig. 13A, the nozzle 20 exhibits a thorn 29 to split the molten feedstock into a thin wall and an empty core, for example.

Furthermore, the arrangement 10 comprises a fluid outlet 31 for injecting fluid into the hollow core of the extruded bead 30. In the embodiment shown in Fig. 2, the fluid outlet 31 is provided coaxially and at the centre of the construction material outlet 27. The fluid outlet 31 is in fluid communication with the fluid pressure adjusting device 21, which is in turn in fluid communication with the fluid source 9. In an alternative embodiment, the fluid outlet 31 is not integrated into the nozzle 20 but is attached to the lateral surface of the nozzle 20 and/or is provided separate therefrom. In the present embodiment, the fluid pressure adjusting device 21 comprises a flow control valve for controlling the pressure of the fluid injected into the hollow core of the extruded bead 30 via the fluid outlet 31. In addition, in the present embodiment, the fluid pressure adjusting device 21 comprises a pressure relief valve for relieving an overpressure present in the hollow core of the extruded bead 30. Both the flow control valve and the pressure relief valve of the fluid pressure adjusting device 21 are adjustable and controllable via the control unit 22. In an alternative embodiment, the fluid pressure adjusting device 21 comprises only the flow control valve or the pressure relief valve.

In addition, the arrangement 10 comprises the cooling device 25, which includes a conductive cooling unit 32 and a convective cooling unit 33. The conductive cooling unit 32 comprises cooling coils integrated into the nozzle 20 adjacent the construction material outlet 27, which are in fluid connection via fluid pipes with a conduction fluid source 34. The conduction fluid source 34 is configured to circulate a cooling fluid, e.g., water, through the cooling coils integrated into the nozzle 20. The convective cooling unit 33 comprises a cooling outlet for ejecting a cooling gas onto the extruded hollow core bead 30. The cooling outlet is in fluid communication with a convective cooling gas source 35. The cooling gas source 35 is configured to convey a cooling gas, e.g., air, to the cooling outlet for blowing it onto the extruded hollow core bead 30. Both cooling units 32 and 33 are configured to cool the extruded hollow core bead 30 so as to accelerate solidification and hardening. Both cooling sources 34 and 35 are controllable via the control unit 22.

In addition, the arrangement 10 comprises the heating device 36 having a heating outlet for ejecting a heating gas onto a bead 37 that has been previously laid out by the system 1. The heating device 36 comprises a heating fluid source 38, e.g., a heating gas source, preferably a heating air source, which is in fluid communication with the heating outlet. The heating device 36 is controllable via the control unit 22 and is configured to eject a heating gas onto the previously laid out bead 37 so as to melt the surface of said bead 37 and enhance a connection between the previously laid out bead 37 and the currently laid out bead 30.

Furthermore, the arrangement 10 comprises a sensing device 24 for sensing a geometrical parameter of the extruded hollow core bead 30. In the present embodiment, the sensing device 24 is configured to determine the wall thickness and the extrusion height of the extruded hollow core bead 30. The sensing device 24 is electrically connected to the control unit 22.

The control unit 22 is configured to control the heating fluid source 38 of the heating device 36, the motor 14 and the melting device 17 of the extruder 8, the fluid source 9 and the fluid pressure adjusting device 21 as well as the cooling sources 34 and 35 of the cooling device 25. Furthermore, the control unit 22 is configured to control one or more of these devices on the basis of data determined by the sensing device 24. In the present embodiment, only one control unit 22 is provided for controlling all of said devices. In an alternative embodiment, one or more of these devices can have a separate control unit. In addition, the control unit 22 or the separate control unit(s) of one or more of the devices can be part of the control unit 6 for controlling the robot 2. The control unit 22 is configured to control the assembly 3 according to the method described in connection with Fig. 11 below.

Figs. 3 to 5 show a first embodiment of the nozzle 20 of the arrangement 10 shown in Fig. 2. The nozzle 20 comprises an elongate body having the nozzle inlet 28 and the construction material outlet 27. The nozzle inlet 28 is provided at one face of the elongate body and the construction material outlet 27 is provided at the opposite face of said body. The nozzle 20 exhibits an essentially cylindrical form. As shown in Fig. 4, the inlet 28 comprises five orifices, four of which are situated in a squared fashion and the fifth orifice being situated at the centre of said square. The four outer orifices lead into channels 39 extending on the inside axially along the nozzle 20, these channels 39 moving radially outwards on the inside of the nozzle 20 to terminate in a ring-like channel having the form of a hollow cylinder. At the same time, the centre orifice of the nozzle inlet 28 is fluidly connected to a central channel 40 extending centrally in axial direction along the nozzle 20 to terminate at the centre of said ring-like channel. The ring-like channel as well as the portion of the central channel 40 situated at its centre are in fluid communication with each other to form a die for forming a bead 30 with a cross section of a hollow circle have two crossing reinforcement struts at its centre as shown in Fig. 5. The die has a certain axial extension along the nozzle 20 and terminates in a corresponding construction material outlet 27.

The die terminating in the construction material outlet 27 of the nozzle 20 of Figs. 3-5 exhibits four voids in its cross-sectional shape, which collectively form the fluid outlet 31 in the present embodiment. The four voids forming the fluid outlet are provided by four chambers, which are in fluid connection neither with the channels 39 nor with the channel 40. The chambers have a cross-sectional shape of a quarter circle with the cross-section being oriented perpendicular to the axial direction of the nozzle 20. As derivable from Fig. 5, the chambers extend in axial direction of the nozzle 20 from the fluid outlet 31 towards the nozzle inlet 28 before extending radially inward to connect to a fluid inlet pipe 42 extending perpendicular to the axial direction of the nozzle 20. Two of these chambers connect to a fluid inlet pipe 42 extending from the right side of the nozzle 20 and the other two chambers connect to a fluid inlet pipe extending from the left side of the nozzle 20. Both fluid inlet pipes terminate at the lateral surface of the nozzle 20 collectively forming a fluid inlet, which is in fluid connection with the fluid pressure adjusting device 21 shown in Fig. 2.

When the nozzle 20 of Figs. 3 to 5 is attached to the extruder 8 such that the extruder outlet 15 is in fluid communication with the nozzle inlet 28, the spindle 13 of the extruder 8 will convey melted feedstock into the nozzle inlet 28 and push it through the channels 39 and 40 to extrude it into the hollow cylinder having two crossing reinforcement struts. At the same time, the fluid source 9 of Fig. 2 will provide a fluid that is injected into the fluid inlet pipes 42 to flow through the four separate chambers to the fluid outlet 31 for being injected into the hollow core of the extruded bead 30. The entire nozzle 20 of Figs. 3-5 can be integrally formed, e.g., from metal and/or polymer, preferably by additive manufacturing.

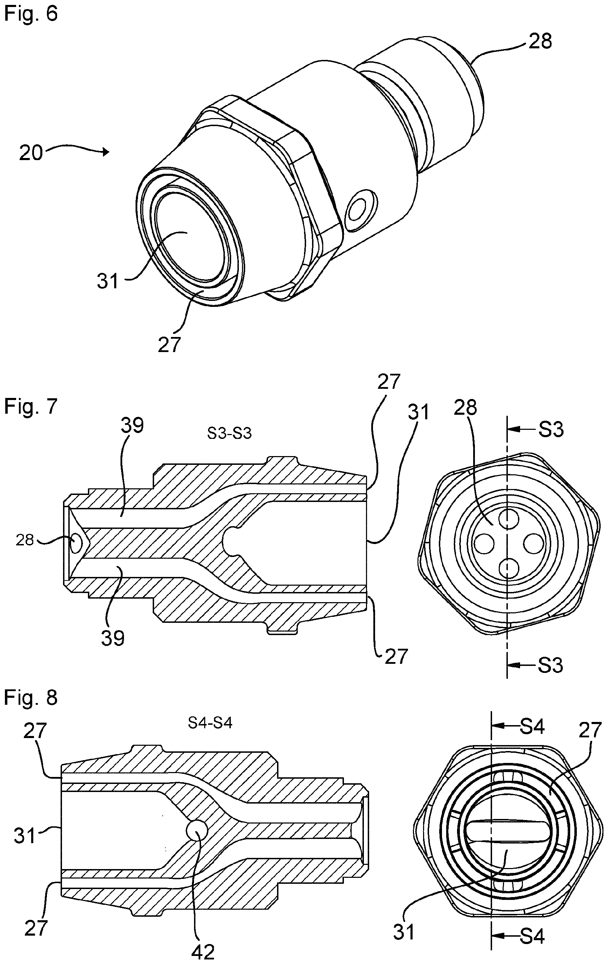

Figs. 6 to 8 show an alternative embodiment of the nozzle 20 of the arrangement 10 of Fig. 2. The nozzle 20 of Figs. 6 to 8 corresponds to the nozzle 20 of Figs. 3 to 5 except for the below described differences. In contrast to the embodiment of Figs. 3 to 5, the embodiment of Figs. 6 to 8 does not comprise a central orifice at the nozzle inlet 28. In contrast, the nozzle inlet 28 comprises only the four orifices arranged in a rectangular fashion as shown in Fig. 7. Just as the four rectangular orifices of the embodiment of Figs. 3 to 5, the orifices of the embodiment of Figs. 6 to 8 extend into channels 39, which extend on the inside of the nozzle 20 in axial direction before extending radially outward to terminate in a ring-like channel. The ring-like channel extends over a certain distance along the axial direction of the nozzle 20 to form a die and terminates in the construction material outlet 27. As derivable from Figs. 6 and 8, the construction material outlet 27 of the embodiment of Figs. 6 to 8 has a cross-sectional shape of a hollow circle without any crossing reinforcement struts. The fluid outlet 31 in the embodiment of Figs. 6 to 8 is formed by a single orifice provided concentrically and at the centre of the construction material outlet 27. Just as in the embodiment of Figs. 3 to 5, the fluid outlet 31 is in fluid connection with two fluid inlet pipes 42 extending perpendicular to the axial direction of the nozzle 20 and terminating at the right and left sides of the lateral surface of the nozzle, respectively.

As described previously in connection with Fig. 13, the nozzle 20 can also be configured to extrude a hollow core bead having a cross-sectional shape different from those shown in the embodiments of Figs. 3 to 8. The nozzle 20 extruding beads having such different cross-sectional shapes can be configured in line with the principles of the embodiments of Figs. 3-8 or differently.

Fig. 9 shows an embodiment of a method for generating control data for the arrangement 10 of Fig. 2, the assembly 3 of Fig. 2 and the robot 2 of Fig. 1. In a first step I, the method obtains a manufacturing path M defined by multiple points A, which are shown in Fig. 10A. In the present embodiment, the manufacturing path M is obtained from a slice of a three-dimensional model of the architectural structure to be manufactured with the system 1 of Fig. 1. Fig. 10A exemplarily indicates points A1 to A7 at key positions of the manufacturing path M while points of the manufacturing path in between A1 to A7 are not shown. As described above, the three-dimensional model of the architectural structure is divided into a plurality of slices, e.g., by a slicing software, each of the slices containing a manufacturing path as that shown in Fig. 10A, wherein the different slices stacked on one another collectively build up the architectural structure.

In a second step II, the geometry of the manufacturing path M is analysed. In this step II, in the present embodiment, the degree of turning of the manufacturing path M is determined. As shown in Fig. 10A, the manufacturing path M exhibits a very high degree of turning at the corner points A2, A4 and A6 while the degree of turning at the midpoints A1, A3, A5 and A7 is moderate.

In a third step III, the degrees of turning determined in step II are compared to a predefined limit value. If it is determined in step III that the limit value at a specific point A is exceeded, then the manufacturing path M is adjusted in a subsequent step IV at said specific point A. In the present embodiment, as shown in Fig. 10A, the manufacturing path M is adjusted to a manufacturing path M' in such a way that the degree of turning of said adjusted manufacturing path M' does not exceed the predefined limit value at any position A. This adjustment of the manufacturing path M in step IV ensures that the manufacturing path does not exhibit any positions leading to a blockage of the fluid injected into the hollow core bead, which could result in an overinflation of the extruded bead.

In a subsequent step V, pressure values P1 to P7 for the fluid injected into the hollow core of the extruded bead 30 via the fluid outlet 31 are assigned to the different points A1 to A7 of the manufacturing path M'. The pressure values P assigned to the different points A of the manufacturing path M' are illustrated in Fig. 10B. This step V includes the assignment of a pressure value P to a point A of the manufacturing path M' exhibiting a high degree of turning, which is lower than the pressure value assigned to a point P of the manufacturing path M' at a point A exhibiting a moderate degree of turning. In the specific example of Figs. 10A and 10B, the degree of turning at points A2, A4 and A6 of the manufacturing path M' is relatively high, implying that relatively low-pressure values P2, P4 and P6 are assigned to those points. In contrast, the degree of turning at the positions A1, A3, A5 and A7 of the manufacturing path M' is relatively moderate, implying that relatively high-pressure values P1, P3, P5 and P7 are assigned to those points.

The method of Fig. 9 ensures that passages of the manufacturing path M' where large degrees of turning are present, which results in a larger flow resistance for the fluid injected into the hollow core of the extruded bead 30, exhibit lower pressure values P, thereby inhibiting an overinflation of the extruded bead 30 and ensuring an optimal printing quality. When assigning the different pressure values P to the different points A in step V, it can also by analysed whether the manufacturing path M' has a self-intersection at one of its points A, e.g., if the manufacturing path M' of a single slice crosses itself at a specific position A. If so, a pressure value P can be assigned to said point A where the self-intersection is present, which is lower than the pressure value, which would have been assigned to said point if no self-intersection would have been present. This ensures good printing qualities even in cases of self-intersecting printing paths.

Furthermore, in step III of the method of Fig. 9, it can also be analysed whether a first manufacturing path M of a first slice exhibits two portions that will results in two bead portions being in contact with each other in the same slice plane when implementing said first manufacturing path with the system 1. If so, it may be analysed whether an adjacent second slice comprises a second manufacturing path M, which, when being implemented by the system 1, will result in a further bead portion that is contact with at least one of the two bead portions of the first slice. If that is the case, step IV of the method of Fig. 9 may include shifting at least a portion of the manufacturing path M of the first slice in a direction normal to the first slice to a position in between the first and the second slice so as to bring the bead portion resulting from the shifted manufacturing path in contact with both the other bead portion of the first slice and the bead portion of the second slice. For example, in case that a hollow core bead with a circular cross-sectional shape is extruded, as shown in Fig. 12, portions of the manufacturing paths of the beads B2 on the left-hand side in Fig. 12 were initially arranged in the same slice plane as the portions of the manufacturing paths of the beads B1 but have been shifted normal to the respective slice plane such that the extruded beads B2 are positioned in between two adjoining beads B1 of an adjacent row. This implies that the beads B2 have a contact surface with two adjoining beads B1 and not only with a single bead B1, thereby increasing the strength of the manufactured architectural product.

The step V can include storing the generated control data, i.e., the different points A of the adjusted manufacturing path M' as well as the different pressure values P assigned to the respective points, on a physical storage medium, e.g., a non-volatile memory, preferably in the form of a look-up table. The method described in combination with Fig. 9 including the method steps I to V can be executed on a computer. Therefore, the method can be a computer-implemented method. The method can be part of a slicer software but can also be a method that is executed by a separate software into which the output of the slicer software is loaded, e.g., in a G-code format.

Fig. 11 shows a method for additive manufacturing of an architectural structure with the system 1 of Fig. 1 using the control data generated with the method according to the embodiment of Fig. 9. The method described in connection with Fig. 11 is executed by the control units 6 and 22 of Figs. 1 and 2. In the present embodiment, the control unit 22 carries a non-volatile memory in which the control data generated by the method of Fig. 9 are stored.

In a first step M1, the control unit 6 of the system 1 determines a next position A of the manufacturing path M' to which the end effector 7 of the robot 2 has to be moved. This next position A is communicated to the control unit 22, which determines in a subsequent step M2 the different operating parameters of the assembly 3. In particular, the control unit 22 determines on the basis of the control data stored on the non-volatile memory the pressure value P assigned to the next position A. Besides, the control unit 22 determines operating parameters for the heating device 26, the cooling device 25, the melting device 17 and the motor 14 of the extruder 8. In a subsequent step M3, the control unit 6 moves the end effector 7 of the robot 2 to the next position A and the control unit 22 adjusts the operating parameters of its different systems to the determined target values.

In particular, in step M3, the control unit 22 adjusts the fluid pressure adjusting device 21 so as to inject fluid into the hollow core of the bead 30 via the fluid outlet 31 at the point A of the manufacturing path M' having the pressure value P determined by the control unit 22 on the basis of the control data stored on the non-volatile memory of the control unit 22. At the same time, the heating device 26 is controlled such that an adjacent bead 37 that has been previously laid out is melted so as to improve the connection between the currently laid out bead 30 and the previously laid out bead 37. Likewise, the control unit 22 operates the cooling device, i.e., the conductive cooling unit 32 and the convective cooling unit 33, such that the extruded hollow core bead 30 solidifies in an efficient manner. In case that a pressure is building up in the hollow core of the extruded bead 30 exceeding a predetermined overpressure, the pressure relief valve of the fluid pressure adjusting device 21 opens to relief the overpressure and therefore ensures the desired operating conditions.

During the process, the sensing device 24 determines in step M4 the wall thickness of the extruded bead 30 as well as the extrusion height of the extruded bead 30. The control unit 22 compares the determined wall thickness and extrusion height with predefined target values. In case of a deviation, the control unit 22 goes back to step M3 and adjusts the pressure of the fluid injected into the hollow core of the extruded bead 30 via the fluid pressure adjusting device 21 and/or adjusts, i.e., increases or decreases to a non-zero value, the flow rate of the melted feedstock by adjusting the speed of the electric motor 14 driving the spindle 13. The sensing device 24 determines the wall thickness and the extrusion height of the extruded hollow core bead 30 once again in step M4, and the control unit 22 adjusts the pressure of the fluid and/or the flow rate of the melted feedstock once again in step M3, if a deviation of the parameters determined by the sensing device 24 from the target values is still present. Subsequently, the method returns to its beginning at step M1 and receives the next position A of the manufacturing path M' from the control unit 6 of the robot 2.

### Reference signs

- 1: System for additive manufacturing of an additive structure
- 2: Robot
- 2a: Basis
- 3: Assembly for additive manufacturing of an additive structure
- 4: Joint
- 5: Link
- 6: Control unit
- 7: End effector
- 8: Extruder
- 9: Fluid source
- 10: Arrangement for additive manufacturing of an additive structure
- 11: Housing
- 12: Working space
- 13: Spindle
- 14: Motor
- 15: Extruder outlet
- 16: Extruder inlet
- 17, 18: Melting device
- 20: Nozzle
- 21: Fluid pressure adjusting device
- 22: Control unit
- 24: Sensing device
- 25, 32, 33, 34, 35: Cooling device
- 26, 38: Heating device
- 30, 37, B1, B2: Bead
- 39,40: Channels
- 42: Fluid inlet pipe
- M, M': Manufacturing path
- A, P: Points of path, pressures assigned to points
- S: Sectional views
- I: Obtain manufacturing path
- II: Analyse geometry of manufacturing path
- III: Compare geometry with limit value
- IV: Adjust manufacturing path on the basis of analysis
- V: Assign pressure values to points of manufacturing path
- M1: Determine next position
- M2: Determine operating parameters for system
- M3: Adjust fluid pressure adjusting device
- M4: Determine geometric parameter of extruded bead

## Claims

1. An arrangement (10) for additive manufacturing of a structure, preferably an architectural structure, the arrangement (10) comprising
a nozzle (20) having a construction material outlet (27) configured to extrude construction material in the form of a hollow core bead (30) along a manufacturing path (M; M') defined by multiple points (A);
a fluid outlet (31) configured to inject a fluid into the hollow core of the extruded bead (30);
a fluid pressure adjusting device (21) configured to adjust a pressure of the fluid injected into the hollow core of the extruded bead (30) via the fluid outlet (31); and
a control unit (22) configured to determine a pressure value (P) assigned to a point (A) of the manufacturing path (M; M') and to control the fluid pressure adjusting device (21) on the basis of the determined pressure value (P).

2. The arrangement (10) according to claim 1, wherein the arrangement (10) further comprises a sensing device (24) for determining at least one of a geometrical parameter of the extruded bead (30) and a parameter of the fluid in the hollow core of the extruded bead (30), wherein the control unit (22) is configured to control the fluid pressure adjusting device (21) on the basis of the determined parameter.

3. The arrangement (10) according to claim 2, wherein the determined parameter is at least one of a wall thickness and an extrusion height of the extruded bead (30).

4. The arrangement (10) according to one of the preceding claims, wherein the fluid pressure adjusting device (21) comprises a flow control valve for adjusting the pressure of the fluid.

5. The arrangement (10) according to one of the preceding claims, wherein the arrangement (10) further comprises a pressure relief valve to relief on overpressure in the hollow core of the extruded bead (30).

6. The arrangement (10) according to claim 5, wherein the fluid pressure adjusting device (21) comprises the pressure relief valve, the pressure relief valve being adjustable and the control unit (22) being configured to adjust the adjustable pressure relief valve on the basis of the determined pressure value (P).

7. The arrangement (10) according to one of the preceding claims, wherein the construction material outlet (27) is configured to extrude a hollow core bead (30) with a cross sectional shape of at least one of a hollow polygon, preferably a hollow rectangle, a hollow oval, preferably a hollow circle, and a solid polygon or solid oval comprising one or more polygonal or oval voids.

8. The arrangement (10) according to one of the preceding claims, wherein the nozzle (20) comprises the fluid outlet (31) and the fluid outlet (31) is formed coaxially with the construction material outlet (27).

9. The arrangement (10) according to one of the preceding claims, wherein the arrangement (10) comprises a cooling device (25) for cooling the extruded hollow core bead (30) to accelerate solidification.

10. The arrangement (10) according to one of the preceding claims, wherein the arrangement (10) comprises a heating device (26) for heating a solidified bead (37) in contact with which the hollow core bead (30) is extruded from the construction material outlet (27) to increase adhesion between the two beads (30, 37).

11. An assembly (3) for additive manufacturing of a structure, preferably an architectural structure, the assembly (3) comprising an extruder (8) with an extruder outlet (28), a melting device (17) for melting a feedstock, a conveyance device (13) for conveying the melted feedstock to the extruder outlet (28), a fluid source (9) for providing a fluid and an arrangement (10) according to one of the preceding claims, wherein the nozzle (20) of the arrangement (10) is coupled to the extruder outlet (28) to receive the melted feedstock and the fluid outlet (31) is coupled to the fluid source (9) for receiving the fluid.

12. A system (1) for additive manufacturing of a structure, preferably an architectural structure, comprising the assembly (3) according to claim 11 and a moving mechanism (2) for moving the construction material outlet (27) of the nozzle (20) along a predetermined manufacturing path (M; M').

13. A method for generating control data for an arrangement (10) according to one of claims 1 to 10, an assembly (3) according to claim 11 or a system (1) according to claim 12 for additive manufacturing of a structure, preferably an architectural structure, the method comprising
obtaining (I) a manufacturing path (M; M') defined by multiple points (A);
analyzing (II) the geometry of the manufacturing path (M; M') at the multiple points (A); and
assigning (V) pressure values (P) to the multiple points (A) of the manufacturing path (M; M') on the basis of the analyzed geometry.

14. The method according to claim 13, wherein analyzing (II) the geometry of the manufacturing path (M; M') includes determining degrees of turning of the manufacturing path (M; M') at the multiple points (A) and wherein assigning (V) pressure values (P) to the multiple points (A) includes assigning a lower pressure value (P2, P4, P6) to a point (A2, A4, A6) of the manufacturing path (M; M') at which a higher degree of turning has been determined than to a point (A1, A3, A5, A7) of the manufacturing path (M; M') at which a lower degree of turning has been determined.

15. The method according to claim 13 or 14, wherein analyzing (II) the geometry of the manufacturing path (M; M') includes determining a degree of turning of the manufacturing path (M; M') at one of the multiple points (A), and wherein the method further comprises comparing (III) the determined degree of turning of the manufacturing path (M) at the point (A) with a predefined limit value and adjusting (IV) the manufacturing path (M') to decrease the degree of turning at said point (A2, A4, A6) when the determined degree of turning exceeds the predefined limit value.
